# EUROPEAN PATENT APPLICATION

(11) **EP 4 478 797 A1**
(43) Date of publication of application: **18.12.2024**
(21) Application number: 22925351.3
(22) Date of filing: 10.02.2022
(51) Int. Cl.: H04W 64/00

(54) **POSITIONING METHOD AND APPARATUS, DEVICE AND STORAGE MEDIUM**

(71) Applicant: Beijing Xiaomi Mobile Software Co., Ltd., Beijing 100085 (CN)
(72) Inventor: SHEN, Yang, Beijing 100085 (CN); WANG, Xinli, Beijing 100085 (CN)
(74) Representative: Gunzelmann, Rainer
(86) International application number: PCT/CN2022/075938
(87) International publication number: WO 2023/150989

(57) **Abstract**

The present invention provides a positioning method and apparatus, a device and a storage medium, and relates to the technical field of communications. The method includes: receiving a location request sent by a location requestor, the location request including an observation UE list and an ID of a target UE (101); sending a first location request to a current serving AMF corresponding to a first observation UE in the observation UE list (102); and obtaining location information of the target UE sent by the current serving AMF corresponding to the first observation UE (103). According to the method provided by the present invention, successful positioning of the target UE is ensured, and the accuracy of the positioning result is ensured.

## Description

### FIELD

The present invention relates to the field of communication technologies, and in particular to a positioning method and apparatus/storage medium/device.

### BACKGROUND

In a communication system, a user equipment (UE) usually needs to be positioned. In related technologies, Uu measurement between the UE and multiple base stations is usually used to locate the UE.

However, in the related art, there are the following disadvantages when using the Uu measurement to locate the UE. Firstly, the Uu measurement between the UE and multiple base stations consumes a lot of power. If the UE used for the Uu measurement is a UE with stringent power constraint (i.e., a power-limited UE), the UE may not be able to bear the power consumed by the Uu measurement, and thus the Uu measurement may not be successfully performed to achieve the location. Secondly, the Uu measurement does not support positioning UEs outside the network coverage of the base station, and thus is limited in the applications. Thirdly, accuracy of the Uu measurement depends on a line of sight (LoS) path between the UE and the base station. On this basis, when the Uu measurement is performed in a complex environment, for example, the LoS is blocked by a (semi)static material such as a high shelter in warehouse or a moving object such as a big truck, it may lead to inaccurate location result.

### SUMMARY

The positioning method and apparatus/storage medium/device provided in the present invention are used to provide a positioning method applicable to UEs with power constraint /being out of the network coverage/with blocked LoS path.

According to an aspect of the present invention, there is provided a positioning method, applied to a core network corresponding to a target UE, including: receiving a location request sent by a location requestor, where the location request includes an observer UE list and an identifier (ID) of the target UE; sending a first location request to a current serving access and mobility management function (AMF) corresponding to a first observer UE in the observer UE list; obtaining location information of the target UE sent by the current serving AMF corresponding to the first observer UE.

According to a further aspect of the present invention, there is provided a positioning method, applied to a current serving AMF corresponding to an observer UE, including: obtaining a first location request sent by a core network device corresponding to a target UE; determining location information of the target UE by triggering the observer UE to perform a positioning procedure and a ranging procedure; sending the location information of the target UE to the core network device corresponding to the target UE.

According to a further aspect of the present invention, there is provided a positioning method, applied to a location management function (LMF) corresponding to an observer UE, including: receiving a second location request sent by a current serving access and mobility management function (AMF) corresponding to the observer UE, where the second location request includes an observer UE list and an identifier (ID) of a target UE; determining location information of the target UE by triggering a positioning procedure for each observer UE in the observer UE list and a ranging procedure between each observer UE in the observer UE list and the target UE according to the second location request; sending the location information of the target UE to the current serving AMF corresponding to the observer UE.

In a further aspect of the present invention, there is provided a positioning apparatus including: a receiving module configured to receive a location request sent by a location requestor, where the location request includes an observer UE list and an identifier (ID) of the target UE; a sending module configured to send a first location request to a current serving access and mobility management function (AMF) corresponding to a first observer UE in the observer UE list; an obtaining module configured to obtain location information of the target UE sent by the current serving AMF corresponding to the first observer UE.

In a further aspect of the present invention, there is provided a positioning apparatus including: an obtaining module configured to obtain a first location request sent by a core network device corresponding to a target UE; a triggering module configured to trigger an observer UE to perform a positioning procedure and a ranging procedure to determine location information of the target UE; a sending module configured to send the location information of the target UE to the core network device corresponding to the target UE.

In a further aspect of the present invention, there is provided a positioning apparatus including: a receiving module configured to receive a second location request sent by a current serving access and mobility management function (AMF) corresponding to an observer UE, where the second location request includes an observer UE list and an identifier (ID) of a target UE; a triggering module configured to trigger a positioning procedure for each observer UE in the observer UE list and a ranging procedure between each observer UE in the observer UE list and the target UE according to the second location request to determine location information of the target UE; a sending module configured to send the location information of the target UE to the current serving AMF corresponding to the observer UE.

In a further aspect of the present invention, there is provided a communication device including: a processor, and a memory having stored therein a computer program that, when executed by the processor, causes the device to implement the method provided in the embodiments of the aspect described above.

In a further aspect of the present invention, there is provided a communication device including: a processor, and a memory having stored therein a computer program that, when executed by the processor, causes the device to implement the method provided in the embodiments of another aspect described above.

In a further aspect of the present invention, there is provided a communication device including: a processor, and a memory having stored therein a computer program that, when executed by the processor, causes the device to implement the method provided in the embodiments of the further aspect described above.

In a further aspect of the present invention, there is provided a communication device including: a processor and an interface circuit. The interface circuit is configured to receive a code instruction and transmit the code instruction to the processor; and the processor is configured to run the code instruction to implement the method provided in the embodiments of the aspect described above.

In a further aspect of the present invention, there is provided a communication device including: a processor and an interface circuit. The interface circuit is configured to receive a code instruction and transmit the code instruction to the processor; and the processor is configured to run the code instruction to implement the method provided in the embodiments of another aspect described.

In a further aspect of the present invention, there is provided a communication device including: a processor and an interface circuit. The interface circuit is configured to receive a code instruction and transmit the code instruction to the processor; and the processor is configured to run the code instruction to implement the method provided in the embodiments of the further aspect described.

In a further aspect of the present invention, there is provided a computer-readable storage medium having stored therein instructions that, when executed, cause the method provided in the embodiments of the aspect to be implemented.

In a further aspect of the present invention, there is provided a computer-readable storage medium having stored therein instructions that, when executed, cause the method provided in the embodiments of another aspect to be implemented.

In a further aspect of the present invention, there is provided a computer-readable storage medium having stored therein instructions that, when executed, cause the method provided in the embodiments of the further aspect to be implemented.

In summary, with the positioning method/apparatus/storage medium/device provided in the embodiments of the present invention, the core network device corresponding to the target UE receives the location request sent by the location requestor, where the location request includes the observer UE list and the ID of the target UE, sends the first location request to the current serving AMF corresponding to the first observer UE in the observer UE list, and obtains the location information of the target UE sent by the current serving AMF corresponding to the first observer UE. It can be seen that in the embodiments of the present invention, the core network device corresponding to the target UE may obtain the location information of the target UE sent by the current serving AMF corresponding to the first observer UE by sending the first location request to the AMF corresponding to the first observer UE in the observer UE list. That is, in the embodiments of the present invention, when the Uu measurement is used to locate the target UE, if the Uu measurement cannot accurately locate the target UE in any case such as the target UE is power-limited or the target UE is out of the network coverage of the base station, or there is no LoS path between the target UE and the base station, or the LoS path between the target UE and the base station is interfered, the target UE may be located with assistance of PC5 measurement, which ensures the successful positioning of the target UE and improves the accuracy of the location result.

Additional aspects and advantages of embodiments of the present invention will be given in part in the following descriptions, become apparent in part from the following descriptions, or be learned from the practice of the embodiments of the present invention.

### BRIEF DESCRIPTION OF THE DRAWINGS

The above and/or additional aspects and advantages of the present invention will become apparent and more readily appreciated from the following descriptions made with reference to the drawings, in which:
FIG. 1 is a flowchart of a positioning method provided by an embodiment of the present invention;
FIG. 2 is a flowchart of a positioning method provided by another embodiment of the present invention;
FIG. 3 is a flowchart of a positioning method provided by a still another embodiment of the present invention;
FIG. 4 is a flowchart of a positioning method provided by a further embodiment of the present invention;
FIG. 5 is a flowchart of a positioning method provided by a further embodiment of the present invention;
FIG. 6 is a flowchart of a positioning method provided by a further embodiment of the present invention;
FIG. 7 is a flowchart of a positioning method provided by a further embodiment of the present invention;
FIG. 8 is a flowchart of a positioning method provided by a further embodiment of the present invention;
FIG. 9 is a flowchart of a positioning method provided by a further embodiment of the present invention;
FIG. 10 is a schematic diagram of a positioning apparatus provided by an embodiment of the present invention;
FIG. 11 is a schematic diagram of a positioning apparatus provided by another embodiment of the present invention;
FIG. 12 is a schematic diagram of a positioning apparatus provided by still another embodiment of the present invention;
FIG. 13 is a block diagram of a user equipment provided by an embodiment of the present invention; and
FIG. 14 is a block diagram of a base station provided by an embodiment of the present invention.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with embodiments of the present invention. They are merely examples of devices and methods consistent with some aspects of embodiments of the present invention as recited in the appended claims.

Terms used herein in the embodiments of the present invention are for the purpose of describing specific embodiments, but should not be construed to limit the embodiments of the present invention. As used in embodiments of the present invention and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present invention for describing various information, these information should not be limited by these terms. These terms are used for distinguishing information of the same type from each other. For example, first information may also be referred to as second information, and similarly, the second information may also be referred to as the first information, without departing from the scope of embodiments of the present invention. As used herein, the term "if' may be construed to mean "when" or "upon" or "in response to determining" depending on the context.

Embodiments of the present invention are described in detail below, examples of which are illustrated in the accompanying drawings, where similar or same reference numerals refer to similar or same elements. The embodiments described below with reference to the drawings are illustrative and intended to explain the present invention, and should not be construed as limiting the present invention.

The positioning method and apparatus/storage medium/device provided by the present invention will be described in detail below with reference to the accompanying drawings.

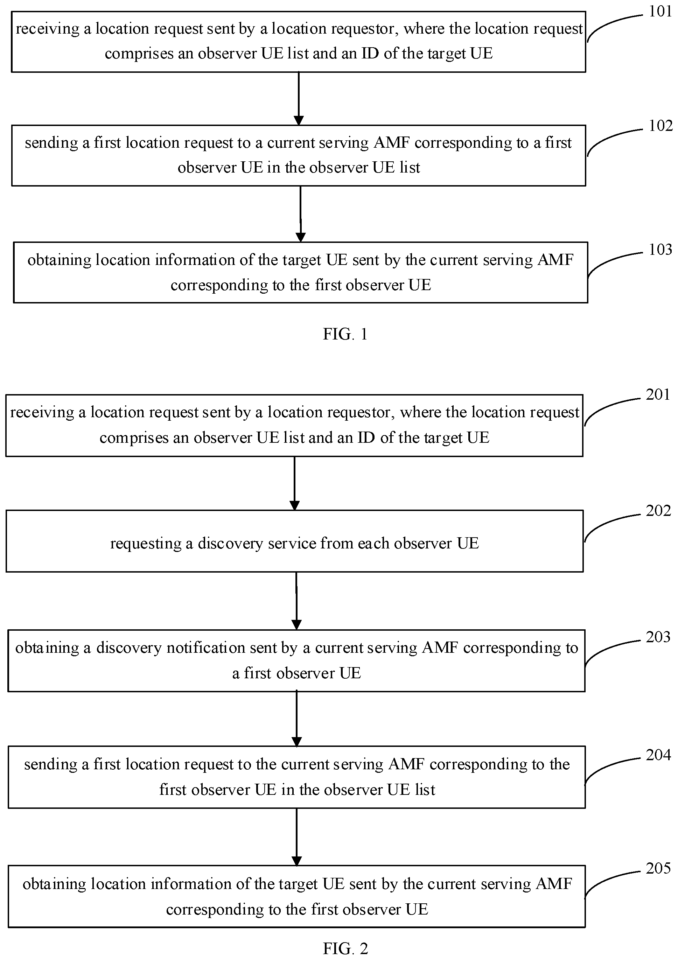

FIG. 1 is a flowchart of a positioning method provided by an embodiment of the present invention, which is performed by a core network corresponding to a target UE. As shown in FIG. 1, the positioning method may include the following steps.

In block 101, a location request sent by a location requestor is received, the location request includes an observer UE list and an identifier (ID, also called an identity document) of the target UE.

It should be noted that, in embodiments of the present invention, UE may be a device that provides voice and/or data connectivity to a user. The UE may communicate with one or more core networks via a radio access network (RAN). The UE may be an Internet of Things terminal, such as a sensor device, a mobile phone (or referred to as a "cellular" phone) and a computer with an Internet of Things terminal. For example, it may be a fixed, portable, pocket-sized, handheld, built-in computer or vehicle-mounted apparatus, for example, a station (STA), a subscriber unit, a subscriber station, a mobile station, a mobile, a remote station, an access point, a remote terminal, an access terminal, a user terminal, or a user agent. Alternatively, the UE may be a device of an unmanned aerial vehicle. Alternatively, the UE may be a vehicle-mounted device, for example, a driving computer with a wireless communication function, or a wireless communication device externally connected with a driving computer. Alternatively, the UE may be a roadside device, such as a street lamp, a signal lamp or other roadside devices with a wireless communication function.

In an embodiment of the present invention, the location requestor may be a location service (LCS) or an application function (AF). The above-mentioned LCS may be any one of an application server, a network function (NF), or UE. In an embodiment of the present invention, the core network device corresponding to the target UE may be a gateway mobile location centre (GMLC) or a network exposure function (NEF).

It should be noted that, in an embodiment of the present invention, when the location requestor is the LCS, the LCS may directly send the location request to the core network device corresponding to the target UE. In another embodiment of the present invention, when the location requestor is the AF, the AF may send the location request to the core network device corresponding to the target UE through the NEF.

In an embodiment of the present invention, the above-mentioned observer UE list may specifically include a unique identifier corresponding to at least one observer UE. For example, the observer UE list may include a subscriber permanent identifier (SUPI) corresponding to the observer UE.

Further, in one embodiment of the present invention, the location request may include a delay for allowing the observer UE to perform a discovery service for the target UE.

It should be noted that, in an embodiment of the present invention, the above-mentioned location request may further include an allowed delay, the allowed delay may specifically be a delay allowed for the core network device corresponding to the target UE to subsequently obtain a ranging result of the target UE. Specifically, since the discovery of the target UE may take some time, after the core network device corresponding to the target UE has requested the discovery service for the target UE based on the above-mentioned location request, it takes a period of time to obtain the discovery result of the target UE. Therefore, an allowed delay needs to be set to reserve the time required for the discovery of the target UE.

In block 102, a first location request is sent to a current serving access and mobility management function (AMF) corresponding to a first observer UE in the observer UE list.

In an embodiment of the present invention, the first location request may include the observer UE list and the ID of the target UE.

Further, in an embodiment of the present invention, after the current serving AMF corresponding to the first observer UE in the observer UE list receives the first location request, the current serving AMF corresponding to the first observer UE may select, according to available information or local configuration, a location management function (LMF) for corresponding to the first observer UE, and the current serving AMF corresponding to the first observer UE may send a second location request to the LMF corresponding to the first observer UE. The second location request may include the observer UE list and the ID of the target UE, and the second location request may be used to: make the LMF corresponding to the observer UE perform a positioning procedure based on the second location request to locate each observer UE in the observer UE list to obtain positioning measurement information, and make the LMF corresponding to the observer UE perform a ranging procedure based on the second location request to allow each observer UE in the observer UE list to perform ranging on the target UE to obtain ranging measurement information, and make the LMF corresponding to the observer UE determine location information of the target UE based on the positioning measurement information and ranging measurement information corresponding to all observer UEs. After that, the current serving AMF corresponding to the first observer UE may receive the location information of the target UE sent by the LMF corresponding to the first observer UE.

It should be noted that when the UE accesses the base station, the AMF usually provides related services, and, in an embodiment of the present invention, the "current serving AMF corresponding to the observer UE" mentioned hereinafter refers to an AMF that provides service(s) for the observer UE at the current moment.

In block 103, location information of the target UE sent by the current serving AMF corresponding to the first observer UE is received.

In summary, with the positioning method provided in the embodiments of the present invention, the core network device corresponding to the target UE receives the location request sent by the location requestor, where the location request includes the observer UE list and the ID of the target UE, sends the first location request to the current serving AMF corresponding to the first observer UE in the observer UE list, and obtains the location information of the target UE sent by the current serving AMF corresponding to the first observer UE. It can be seen that in the embodiments of the present invention, the core network device corresponding to the target UE may obtain the location information of the target UE sent by the current serving AMF corresponding to the first observer UE by sending the first location request to the AMF corresponding to the first observer UE in the observer UE list. That is, in the embodiments of the present invention, when the Uu measurement is used to locate the target UE, if the Uu measurement cannot accurately locate the target UE in any case such as the target UE is power-limited or the target UE is out of the network coverage of the base station, or there is no LoS path between the target UE and the base station, or the LoS path between the target UE and the base station is interfered, the target UE may be located with assistance of PC5 measurement, which ensures the successful positioning of the target UE and improves the accuracy of the location result.

FIG. 2 is a flowchart of a positioning method provided by another embodiment of the present invention, which is performed by the core network corresponding to the target UE. As shown in FIG. 2, the positioning method may include the following steps.

In block 201, a location request sent by a location requestor is received, the location request includes an observer UE list and an ID of the target UE.

In an embodiment of the present invention, for detailed introduction of block 201, reference may be made to relevant introduction of the foregoing embodiments, and details are not repeated here in the embodiment of the present invention.

In block 202, a discovery service is requested from each observer UE.

In an embodiment of the present invention, the discovery service is used to discover the target UE.

In an embodiment of the present invention, requesting the discovery service from each observer UE may include the followings.

The GMLC corresponding to the target UE uses the SUPI of each observer UE to invoke a service operation from a unified data management (UDM) to request UDM to return a network address of the current service AMF corresponding to each observer UE. After that, the GMLC corresponding to the target UE sends a discovery request to the current serving AMF corresponding to each observer UE based on the network address of the current serving AMF corresponding to each observer UE, so that the current serving AMF corresponding to each observer UE invokes a discovery program to trigger each observer UE to perform a discovery service for the target UE.

In an embodiment of the present invention, the above-mentioned UDM is specifically used as a functional module of the core network device.

The AMF is a logical node responsible for mobility management in the core network. The UE communicates with the core network through the corresponding AMF. In an embodiment of the present invention, the discovery request may include the allowed delay, so that if the observer UE fails to discover the target UE within the specified time, it may continue to perform the discovery service for the target UE until the target UE is discovered or until the allowed delay. In an embodiment of the present invention, the delay allowed in the discovery request may be derived based on the above-mentioned location request.

In addition, in an embodiment of the present invention, before requesting the discovery service from each observer UE, it needs to determine whether to request the discovery service from each observer UE. This part of content will be introduced in detail in subsequent embodiments.

In block 203, a discovery notification sent by the current serving AMF corresponding to the first observer UE is obtained.

In an embodiment of the present invention, the discovery notification is used to indicate that the first observer UE has discovered the target UE.

In an embodiment of the present invention, the first observer UE is the observer UE corresponding to an AMF that first sends the discovery notification to the core network device among the AMFs corresponding to all the observer UEs.

On this basis, in an embodiment of the present invention, after the core network device corresponding to the target UE receives the discovery notification sent by the current serving AMF corresponding to the first observer UE, the core network device corresponding to the target UE may realize the positioning of the target UE by interacting with the first observer UE only without interacting with other observer UEs. Therefore, the core network device corresponding to the target UE may release (that is, stop) discovery services of other observer UEs except for the first observer UE to reduce power consumption.

In block 204, a first location request is sent to the current serving AMF corresponding to the first observer UE in the observer UE list.

In block 205, location information of the target UE sent by the current serving AMF corresponding to the first observer UE is received.

It should be noted that, in an embodiment of the present invention, after the core network device corresponding to the target UE sends the first location request to the current serving AMF corresponding to the first observer UE, the current serving AMF corresponding to the first observer UE may send the second location request to the LMF corresponding to the first observer UE, so as to request the LMF corresponding to the first observer UE to obtain the location information of the target UE. The detailed introduction of the current serving AMF corresponding to the first observer UE requesting the LMF corresponding to the first observer UE to obtain the location information of the target UE based on the second location request may refer to the description of the operation in block 102, which will not be elaborated here.

In addition, it should be noted that, in an embodiment of the present invention, since the embodiments of the core network device corresponding to the target UE are not able to present the interaction between the current serving AMF corresponding to the first observer UE and the LMF corresponding to the first observer UE, in the subsequent embodiments, when introducing how the core network device corresponding to the target UE obtains the location information of the target UE, the procedure of obtaining the location information of the target UE based on the first location request and the second location request as described above may be simply described as that the core network device corresponding to the target UE obtains the location information of the target UE by sending the first location request to the current serving AMF corresponding to the first observer UE.

In an embodiment of the present invention, for other detailed introductions of blocks 204 and 205, reference may be made to relevant introductions in the foregoing embodiments, and details are not repeated here in the embodiment of the present invention.

In summary, with the positioning method provided in the embodiments of the present invention, the core network device corresponding to the target UE receives the location request sent by the location requestor, where the location request includes the observer UE list and the ID of the target UE, sends the first location request to the current serving AMF corresponding to the first observer UE in the observer UE list, and obtains the location information of the target UE sent by the current serving AMF corresponding to the first observer UE. It can be seen that in the embodiments of the present invention, the core network device corresponding to the target UE may obtain the location information of the target UE sent by the current serving AMF corresponding to the first observer UE by sending the first location request to the AMF corresponding to the first observer UE in the observer UE list. That is, in the embodiments of the present invention, when the Uu measurement is used to locate the target UE, if the Uu measurement cannot accurately locate the target UE in any case such as the target UE is power-limited, or the target UE is out of the network coverage of the base station, or there is no LoS path between the target UE and the base station, or the LoS path between the target UE and the base station is interfered, the target UE may be located with assistance of the PC5 measurement, which ensures the successful positioning of the target UE and improves the accuracy of the location result.

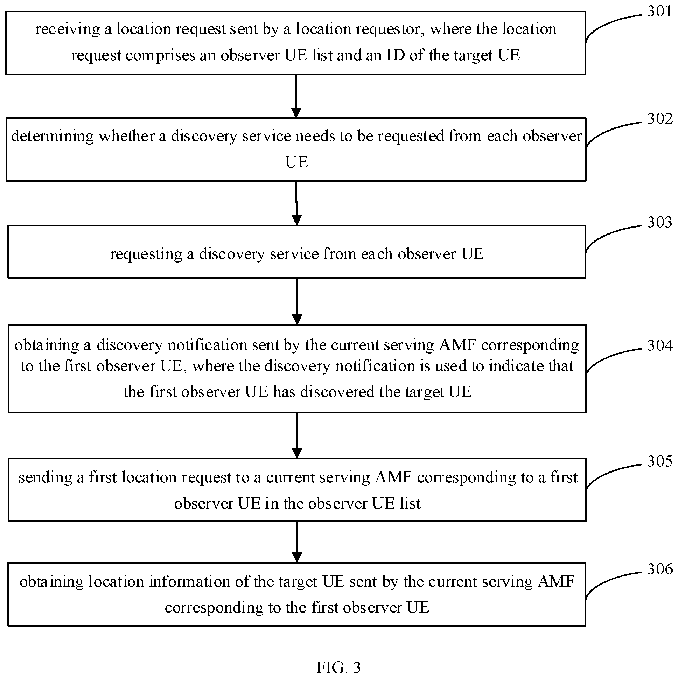

FIG. 3 is a flowchart of a positioning method provided by still another embodiment of the present invention, which is performed by the core network corresponding to the target UE. As shown in FIG. 3, the positioning method may include the following steps.

In block 301, a location request sent by a location requestor is received, the location request includes an observer UE list and an ID of the target UE.

In block 302, it is determined whether a discovery service needs to be requested from each observer UE.

In an embodiment of the present invention, when the core network device corresponding to the target UE receives the location request sent by the location requestor, it first uses the Uu measurement to locate the target UE, during which, if the Uu measurement cannot accurately locate the target UE in any case such as the target UE is power-limited, or the target UE is out of the network coverage of the base station, or there is no LoS path between the target UE and the base station, or the LoS path between the target UE and the base station is interfered, the core network device corresponding to the target UE needs to perform the PC5 measurement (i.e., request the discovery service from each observer UE) to assist in realizing the positioning of the target UE.

On this basis, in an embodiment of the present invention, after the above-mentioned operation in block 301 is performed, the operation in block 302 needs to be performed, that is, to determine whether the discovery service needs to be requested from each observer UE.

Further, the method for determining whether the discovery service needs to be requested from each observer UE may include at least one of the following methods.

Method 1: invoking the service operation from the UDM to obtain a privacy configuration file and the SUPI of the target UE; determining whether to allow the target UE to be located according to the privacy configuration file of the target UE; invoking the service operation from the UDM according to the SUPI of the target UE to request the UDM to return a network address of a current serving AMF corresponding to the target UE in response to allowing the target UE to be located; determining that the discovery service needs to be requested from each observer UE to locate the target UE with the PC5 measurement in response to the UDM not returning the network address of the current serving AMF corresponding to the target UE, which indicates the target UE is out of the network coverage of the base station and the Uu measurement is not able to be performed.

It should be noted that, in an embodiment of the present invention, the aforementioned privacy configuration file and the SUPI of the target UE are pre-stored in the UDM.

Method 2: identifying whether the target UE is a power-limited UE, determining that the discovery service needs to be requested from each observer UE to locate the target UE with the PC5 measurement in response to the target UE being identified as a UE with a low power consumption, which indicates that the target UE may not be able to bear the power consumed by the Uu measurement.

Method 3: identifying whether an LoS path between the target UE and the base station exists, determining that the discovery service needs to be requested from each observer UE to locate the target UE with the PC5 measurement in response to no LoS path between the target UE and the base station, which indicates that the Uu measurement is not able to be performed at present.

Method 4: identifying whether the LoS path between the target UE and the base station is interfered, determining that the discovery service needs to be requested from each observer UE to locate the target UE with the PC5 measurement so as to ensure the accuracy of the location result in response to the LoS path between the target UE and the base station being interfered, which indicates that if the Uu measurement is performed to locate the target UE, the location result may be inaccurate.

In addition, it should be noted that, in an embodiment of the present invention, if the core network device corresponding to the target UE has already known that the target UE is power-limited, or the target UE is out of the network coverage of the base station, or there is no LoS path between the target UE and the base station, or the LoS path between the target UE and the base station is interfered, then after the operation in block 301 is performed, an operation in block 303 may be directly performed without performing the operation in block 302.

In block 303, the discovery service is requested from each observer UE.

In block 304, a discovery notification sent by the current serving AMF corresponding to the first observer UE is obtained.

In block 305, a first location request is sent to the current serving AMF corresponding to the first observer UE in the observer UE list.

In block 306, location information of the target UE sent by the current serving AMF corresponding to the first observer UE is received.

In summary, with the positioning method provided in the embodiments of the present invention, the core network device corresponding to the target UE receives the location request sent by the location requestor, where the location request includes the observer UE list and the ID of the target UE, sends the first location request to the current serving AMF corresponding to the first observer UE in the observer UE list, and obtains the location information of the target UE sent by the current serving AMF corresponding to the first observer UE. It can be seen that in the embodiments of the present invention, the core network device corresponding to the target UE may obtain the location information of the target UE sent by the current serving AMF corresponding to the first observer UE by sending the first location request to the AMF corresponding to the first observer UE in the observer UE list. That is, in the embodiments of the present invention, when the Uu measurement is used to locate the target UE, if the Uu measurement cannot accurately locate the target UE in any case such as the target UE is power-limited, or the target UE is out of the network coverage of the base station, or there is no LoS path between the target UE and the base station, or the LoS path between the target UE and the base station is interfered, the target UE may be located with assistance of the PC5 measurement, which ensures the successful positioning of the target UE and improves the accuracy of the location result.

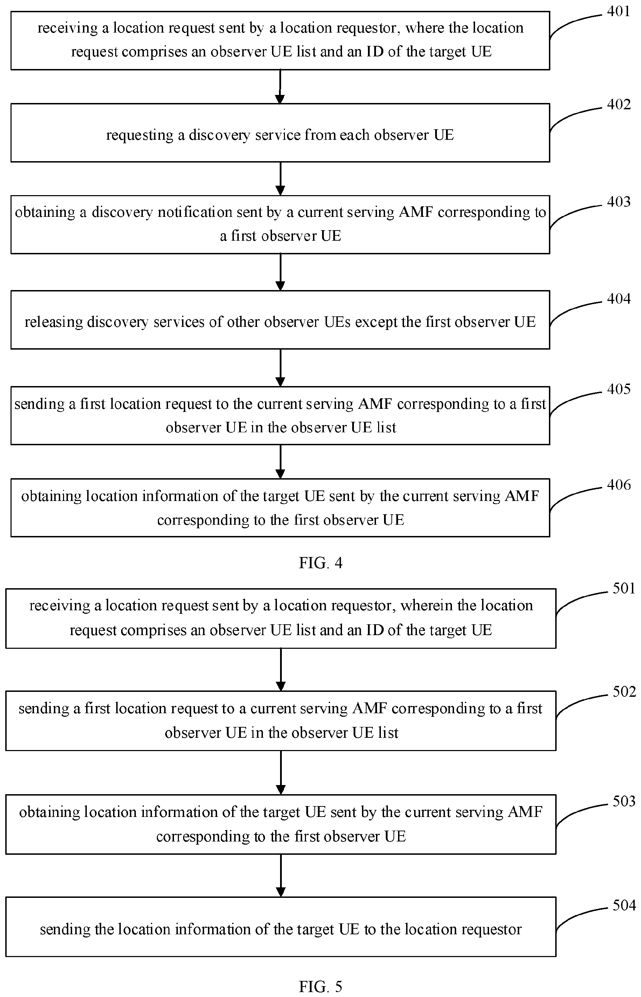

FIG. 4 is a flowchart of a positioning method provided by a further embodiment of the present invention, which is performed by the core network corresponding to the target UE. As shown in FIG. 4, the positioning method may include the following steps.

In block 401, a location request sent by a location requestor is received, the location request includes an observer UE list and an ID of the target UE.

In block 402, a discovery service is requested from each observer UE.

In block 403, a discovery notification sent by a current serving AMF corresponding to a first observer UE is obtained.

For detailed introduction of blocks 401 to 403, reference may be made to relevant introduction of the foregoing embodiments, and details are not repeated here in the embodiment of the present invention.

In block 404, discovery services of other observer UEs except the first observer UE are released.

In an embodiment of the present invention, after the core network device corresponding to the target UE receives a ranging result sent by the current serving AMF corresponding to the first observer UE, the core network device corresponding to the target UE may realize the positioning of the target UE by interacting with the first observer UE only without interacting with other observer UEs. Therefore, the core network device corresponding to the target UE may release (that is, stop) the discovery services of other observer UEs except the first observer UE to reduce power consumption.

In block 405, a first location request is sent to the current serving AMF corresponding to the first observer UE in the observer UE list.

In block 406, location information of the target UE sent by the current serving AMF corresponding to the first observer UE is received.

For detailed introduction of blocks 405 to 406, reference may be made to relevant introduction of the foregoing embodiments, and details are not repeated here in the embodiment of the present invention.

In summary, with the positioning method provided in the embodiments of the present invention, the core network device corresponding to the target UE receives the location request sent by the location requestor, where the location request includes the observer UE list and the ID of the target UE, sends the first location request to the current serving AMF corresponding to the first observer UE in the observer UE list, and obtains the location information of the target UE sent by the current serving AMF corresponding to the first observer UE. It can be seen that in the embodiments of the present invention, the core network device corresponding to the target UE may obtain the location information of the target UE sent by the current serving AMF corresponding to the first observer UE by sending the first location request to the AMF corresponding to the first observer UE in the observer UE list. That is, in the embodiments of the present invention, when the Uu measurement is used to locate the target UE, if the Uu measurement cannot accurately locate the target UE in any case such as the target UE is power-limited, or the target UE is out of the network coverage of the base station, or there is no LoS path between the target UE and the base station, or the LoS path between the target UE and the base station is interfered, the target UE may be located with assistance of the PC5 measurement, which ensures the successful positioning of the target UE and improves the accuracy of the location result.

FIG. 5 is a flowchart of a positioning method provided by a further embodiment of the present invention, which is performed by the core network corresponding to the target UE. As shown in FIG. 5, the positioning method may include the following steps.

In block 501, a location request sent by a location requestor is received, the location request includes an observer UE list and an ID of the target UE.

In block 502, a first location request is sent to a current serving AMF corresponding to a first observer UE in the observer UE list.

In block 503, location information of the target UE sent by the current serving AMF corresponding to the first observer UE is received.

In block 504, the location information of the target UE is sent to the location requestor.

In an embodiment of the present invention, the location requestor may be an LCS client or an AF. In an embodiment of the present invention, when the location requestor is an AF, the core network device corresponding to the target UE may forward the location information of the target UE to the AF through the NEF.

In summary, with the positioning method provided in the embodiments of the present invention, the core network device corresponding to the target UE receives the location request sent by the location requestor, where the location request includes the observer UE list and the ID of the target UE, sends the first location request to the current serving AMF corresponding to the first observer UE in the observer UE list, and obtains the location information of the target UE sent by the current serving AMF corresponding to the first observer UE. It can be seen that in the embodiments of the present invention, the core network device corresponding to the target UE may obtain the location information of the target UE sent by the current serving AMF corresponding to the first observer UE by sending the first location request to the AMF corresponding to the first observer UE in the observer UE list. That is, in the embodiments of the present invention, when the Uu measurement is used to locate the target UE, if the Uu measurement cannot accurately locate the target UE in any case such as the target UE is power-limited, or the target UE is out of the network coverage of the base station, or there is no LoS path between the target UE and the base station, or the LoS path between the target UE and the base station is interfered, the target UE may be located with assistance of the PC5 measurement, which ensures the successful positioning of the target UE and improves the accuracy of the location result.

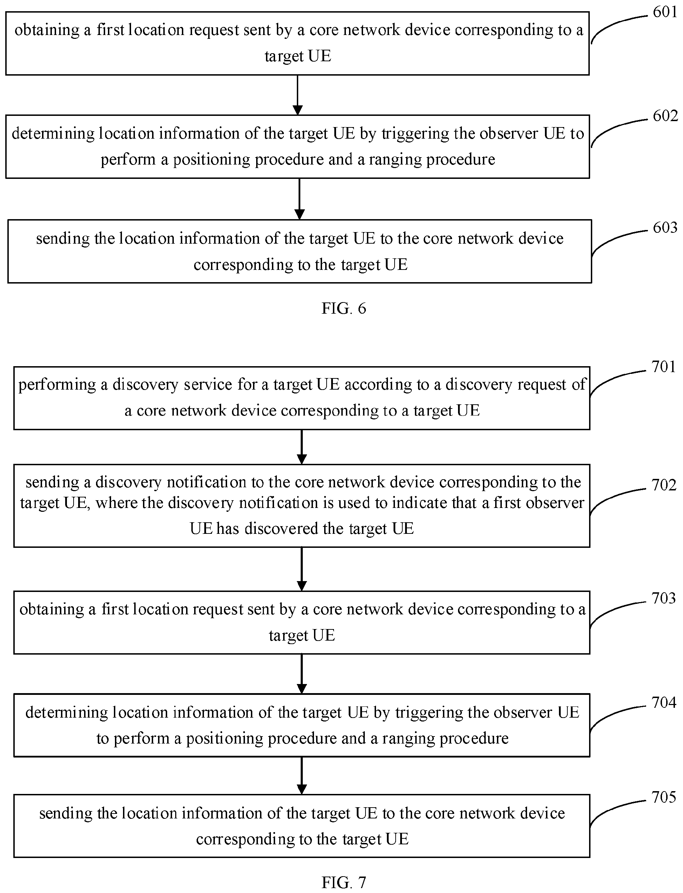

FIG. 6 is a flowchart of a positioning method provided by a further embodiment of the present invention, which is performed by a current serving AMF corresponding to an observer UE. As shown in FIG. 6, the positioning method may include the following steps.

In block 601, a first location request sent by a core network device corresponding to a target UE is obtained.

In an embodiment of the present invention, the detailed introduction of the first location request may refer to the relevant introductions of the foregoing embodiments, which is not elaborated here.

In block 602, location information of the target UE is determined by triggering the observer UE to perform a positioning procedure and a ranging procedure.

In an embodiment of the present invention, determining the location information of the target UE by triggering the observer UE to perform the positioning procedure and the ranging procedure includes: selecting an LMF corresponding to the observer UE; sending a second location request to the LMF corresponding to the observer UE, where the second location request includes an observer UE list and an identifier (ID) of the target UE, and the second location request is used to: make the LMF corresponding to the observer UE perform the positioning procedure according to the second location request to locate each observer UE in the observer UE list to obtain positioning measurement information, make the LMF corresponding to the observer UE perform the ranging procedure according to the second location request to allow each observer UE in the observer UE list to perform ranging on the target UE to obtain ranging measurement information, and make the LMF corresponding to the observer UE determine location information of the target UE according to all positioning measurement information and all ranging measurement information corresponding to all observer UEs; receiving the location information of the target UE sent by the LMF corresponding to the observer UE.

In an embodiment of the present invention, the observer UE list included in the second location request specifically includes at least one ID corresponding to at least one observer UE.

In block 603, the location information of the target UE is sent to the core network device corresponding to the target UE.

In summary, with the positioning method provided in the embodiments of the present invention, the current serving AMF corresponding to the observer UE obtains the first location request sent by the core network device corresponding to a target UE, triggers the observer UE to perform the positioning procedure and the ranging procedure to determine the location information of the target UE, and sends the location information of the target UE to the core network device corresponding to the target UE. It can be seen that in the embodiments of the present invention, the core network device corresponding to the target UE may obtain the location information of the target UE sent by the current serving AMF corresponding to the first observer UE by sending the first location request to the AMF corresponding to the first observer UE in the observer UE list. That is, in the embodiments of the present invention, when the Uu measurement is used to locate the target UE, if the Uu measurement cannot accurately locate the target UE in any case such as the target UE is power-limited, or the target UE is out of the network coverage of the base station, or there is no LoS path between the target UE and the base station, or the LoS path between the target UE and the base station is interfered, the target UE may be located with assistance of the PC5 measurement, which ensures the successful positioning of the target UE and improves the accuracy of the location result.

FIG. 7 is a flowchart of a positioning method provided by a further embodiment of the present invention, which is performed by the current serving AMF corresponding to the observer UE. As shown in FIG. 7, the positioning method may include the following steps.

In block 701, a discovery service is performed on the target UE according to a discovery request of the core network device corresponding to the target UE.

In an embodiment of the present invention, performing the discovery service for the target UE according to the discovery request of the core network device corresponding to the target UE includes the following steps.

In block 7011, the discovery request sent by the core network device corresponding to the target UE is obtained.

In an embodiment of the present invention, the discovery request includes an allowed delay, so that if the observer UE fails to discover the target UE within the specified time, it may continue to perform the discovery service for the target UE until the target UE is discovered or until the allowed delay.

In block 7012, a discovery procedure is invoked to trigger the observer UE to perform the discovery service for the target UE.

In block 7013, the discovery notification sent by the observer UE is obtained.

In block 702, a discovery notification is sent to the core network device corresponding to the target UE, the discovery notification is used to indicate that a first observer UE has discovered the target UE.

In block 703, a first location request sent by the core network device corresponding to the target UE is obtained.

In an embodiment of the present invention, detailed introduction of the first location request may refer to the relevant introductions in the foregoing embodiments, which is not elaborated here.

In block 704, location information of the target UE is determined by triggering the observer UE to perform a positioning procedure and a ranging procedure.

In block 705, the location information of the target UE is sent to the core network device corresponding to the target UE.

Detailed introductions of blocks 704 and 705 may refer to the relevant introductions in the foregoing embodiments, and details are not repeated here in the embodiment of the present invention.

In summary, with the positioning method provided in the embodiments of the present invention, the current serving AMF corresponding to the observer UE obtains the first location request sent by the core network device corresponding to a target UE, triggers the observer UE to perform the positioning procedure and the ranging procedure to determine the location information of the target UE, and sends the location information of the target UE to the core network device corresponding to the target UE. It can be seen that in the embodiments of the present invention, the core network device corresponding to the target UE may obtain the location information of the target UE sent by the current serving AMF corresponding to the first observer UE by sending the first location request to the AMF corresponding to the first observer UE in the observer UE list. That is, in the embodiments of the present invention, when the Uu measurement is used to locate the target UE, if the Uu measurement cannot accurately locate the target UE in any case such as the target UE is power-limited, or the target UE is out of the network coverage of the base station, or there is no LoS path between the target UE and the base station, or the LoS path between the target UE and the base station is interfered, the target UE may be located with assistance of the PC5 measurement, which ensures the successful positioning of the target UE and improves the accuracy of the location result.

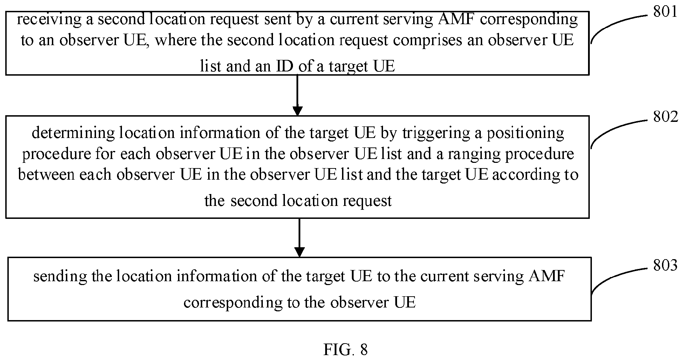

FIG. 8 is a flowchart of a positioning method provided by a further embodiment of the present invention, which is performed by a location management function (LMF) corresponding to an observer UE. As shown in FIG. 8, the positioning method includes the following steps.

In block 801, a second location request sent by a current serving AMF corresponding to the observer UE, the second location request includes an observer UE list and an identifier (ID) of a target UE.

In block 802, location information of the target UE is determined by triggering a positioning procedure for each observer UE in the observer UE list and a ranging procedure between each observer UE in the observer UE list and the target UE according to the second location request.

In an embodiment of the present invention, determining the location information of the target UE by triggering the positioning procedure for each observer UE in the observer UE list and the ranging procedure between each observer UE in the observer UE list and the target UE according to the second location request includes the following steps.

In block 8021, positioning measurement information corresponding to each observer UE is obtained by performing the positioning procedure according to the second location request to locate each observer UE in the observer UE list.

In block 8022, ranging measurement information corresponding to each observer UE is obtained by performing the ranging procedure according to the second location request to allow each observer UE in the observer UE list to perform ranging on the target UE.

In block 8023, the positioning measurement information and the ranging measurement information sent by each observer UE are obtained.

In block 8024, the location information of the target UE is determined according to all positioning measurement information and all ranging measurement information corresponding to all observer UEs.

In block 803, the location information of the target UE is sent to the current serving AMF corresponding to the observer UE.

In summary, with the positioning method provided in the embodiments of the present invention, the core network device corresponding to the target UE receives the location request sent by the location requestor, where the location request includes the observer UE list and the ID of the target UE, sends the first location request to the current serving AMF corresponding to the first observer UE in the observer UE list, and obtains the location information of the target UE sent by the current serving AMF corresponding to the first observer UE. It can be seen that in the embodiments of the present invention, the core network device corresponding to the target UE may obtain the location information of the target UE sent by the current serving AMF corresponding to the first observer UE by sending the first location request to the AMF corresponding to the first observer UE in the observer UE list. That is, in the embodiments of the present invention, when the Uu measurement is used to locate the target UE, if the Uu measurement cannot accurately locate the target UE in any case such as the target UE is power-limited, or the target UE is out of the network coverage of the base station, or there is no LoS path between the target UE and the base station, or the LoS path between the target UE and the base station is interfered, the target UE may be located with assistance of the PC5 measurement, which ensures the successful positioning of the target UE and improves the accuracy of the location result.

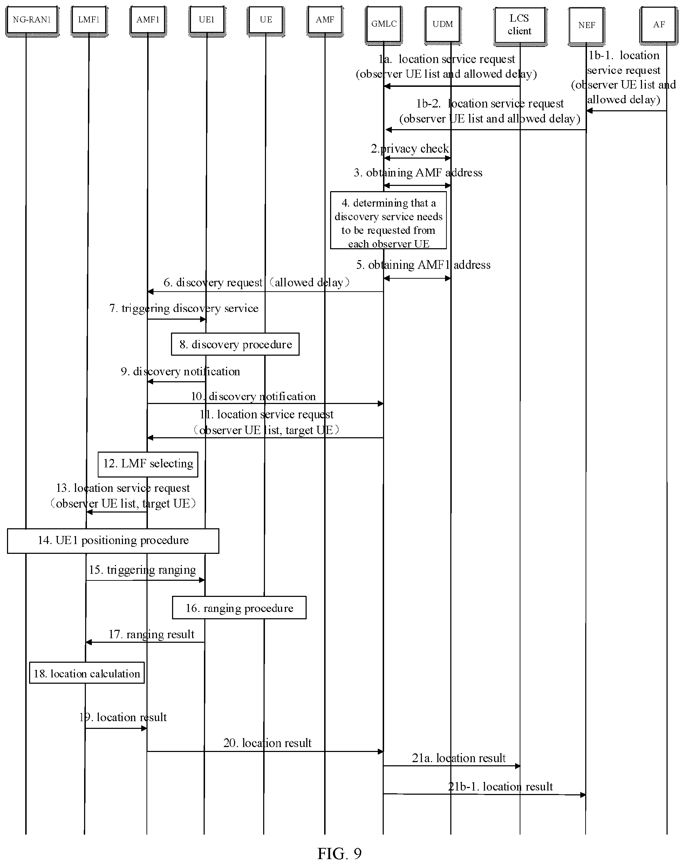

Based on the above description, in order to facilitate the understanding of the content of the present invention, FIG. 9 is a flowchart of a positioning method provided by a further embodiment of the present invention. As shown in FIG. 9, the method may include the following steps.

In block 1, an LCS client and/or an AF (via an NEF) sends a location request for a target UE to a GMLC, where the location request includes a list of potential observer UEs and an allowed delay.

In block 2, the GMLC invokes a service operation from a UDM of the target UE to obtain privacy settings of the UE. The UDM returns privacy settings of the target UE and a SUPI of the UE. The GMLC checks the UE LCS privacy profile. If the target UE is not allowed to be located, operations in blocks 3-21 are skipped.

In block 3, the GMLC invokes the service operation from the UDM of the target UE with the SUPI of the UE. The UDM returns a network address of the current serving AMF or no serving AMF for the target UE.

In block 4, if no serving AMF is returned at block 3, the GMLC determines that the UE is not registered, and thus is out of the network coverage.

In block 5, the GMLC invokes the service operation from the UDM with an SUPI of UE1 (i.e., the observer UE). The UDM returns a network address of a current serving AMF for UE1.

In block 6, the GMLC sends a discovery request to AMF 1 for discovery between UE and UE1.

In block 7, AMF1 invokes a discovery procedure.

In block 8, UE1 performs the discovery procedure for the target UE.

In block 9, UE1 returns a discovery notification to AMF1.

In block 10, AMF1 sends the discovery notification to the GMLC.

In block 11, the GMLC sends a location request including an observer UE ID list and a target UE ID to AMF1 for locating the target UE.

In block 12, AMF1 may select an LMF according to available information or local configuration in the AMF.

In block 13, AMF1 sends the location request including the observer UE ID list and the target UE ID to LMF1 to locate the target UE.

In block 14, LMF1 performs a positioning procedure for UE1.

In block 15, after the LMF1 acquires location information of the UE1, LMF1 triggers a ranging procedure.

In block 16, UE1 performs the ranging procedure for the target UE.

In block 17, UE1 sends a ranging result to LMF1.

In block 18, LMF1 calculates location of the target UE according to the location information of UE1 and the ranging result of the target UE.

In block 19, LMF1 sends the location of the target UE to AMF1.

In block 20, AMF1 forwards the location of the target UE to the GMLC.

In block 21, the location result of the target UE is sent to the LCS client or the AF.

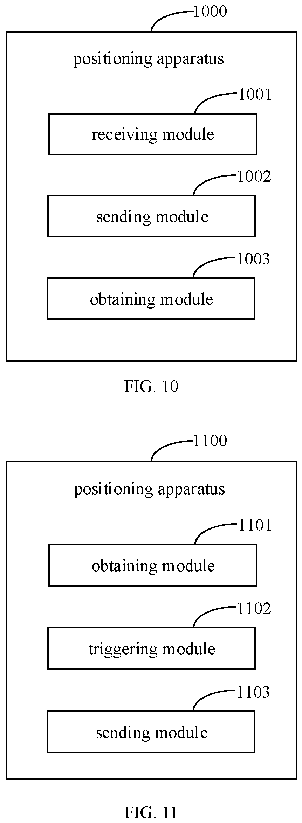

FIG. 10 is a schematic diagram of a positioning apparatus provided by an embodiment of the present invention, applied to a core network device corresponding to a target UE. As shown in FIG. 10, the positioning apparatus includes: a receiving module 1001 configured to receive a location request sent by a location requestor, where the location request includes an observer UE list and an identifier (ID) of the target UE; a sending module 1002 configured to send a first location request to a current serving access and mobility management function (AMF) corresponding to a first observer UE in the observer UE list; an obtaining module 1003 configured to obtain location information of the target UE sent by the current serving AMF corresponding to the first observer UE.

In summary, with the positioning apparatus provided in the embodiments of the present invention, the core network device corresponding to the target UE receives the location request sent by the location requestor, where the location request includes the observer UE list and the ID of the target UE, sends the first location request to the current serving AMF corresponding to the first observer UE in the observer UE list, and obtains the location information of the target UE sent by the current serving AMF corresponding to the first observer UE. It can be seen that in the embodiments of the present invention, the core network device corresponding to the target UE may obtain the location information of the target UE sent by the current serving AMF corresponding to the first observer UE by sending the first location request to the AMF corresponding to the first observer UE in the observer UE list. That is, in the embodiments of the present invention, when the Uu measurement is used to locate the target UE, if the Uu measurement cannot accurately locate the target UE in any case such as the target UE is power-limited, or the target UE is out of the network coverage of the base station, or there is no LoS path between the target UE and the base station, or the LoS path between the target UE and the base station is interfered, the target UE may be located with assistance of the PC5 measurement, which ensures the successful positioning of the target UE and improves the accuracy of the location result.

In an embodiment of the present invention, the apparatus described above is further configured to request a discovery service from each observer UE, where the discovery service is used to discover the target UE; obtain a discovery notification sent by the current serving AMF corresponding to the first observer UE, where the discovery notification is used to indicate that the first observer UE has discovered the target UE.

In a further embodiment of the present invention, the apparatus described above is further configured to determine whether a discovery service needs to be requested from each observer UE.

In a further embodiment of the present invention, the apparatus described above is further configured to invoke a service operation from a UDM to obtain a privacy configuration file and a SUPI of the target UE; determine whether to allow the target UE to be located according to the privacy configuration file of the target UE; invoke the service operation from the UDM according to the SUPI of the target UE to request the UDM to return a network address of a current serving AMF corresponding to the target UE in response to allowing the target UE to be located; determine that the discovery service needs to be requested from each observer UE in response to the UDM not returning the network address of the current serving AMF corresponding to the target UE.

In a further embodiment of the present invention, the apparatus described above is further configured to determine that the discovery service needs to be requested from each observer UE in response to the target UE being identified as a UE with a low power consumption.

In a further embodiment of the present invention, the observer UE list includes a SUPI of an observer UE.

In a further embodiment of the present invention, the apparatus described above is further configured to invoke a service operation from the UDM with the SUPI of each observer UE to request the UDM to return a network address of a current serving AMF corresponding to each observer UE; send a discovery request to the current serving AMF corresponding to each observer UE according to the network address of the current serving AMF corresponding to each observer UE, to allow the current serving AMF corresponding to each observer UE to invoke a discovery procedure to trigger each observer UE to perform the discovery service for the target UE.

In a further embodiment of the present invention, the first observer UE is an observer UE corresponding to an AMF that first sends the discovery notification to the core network device among AMFs corresponding to all observer UEs.

In a further embodiment of the present invention, the apparatus described above is further configured to release discovery services of other observer UEs except the first observer UE.

In a further embodiment of the present invention, the apparatus described above is further configured to send the location information of the target UE to the location requestor.

In a further embodiment of the present invention, the location requestor is a location service (LCS) client or an application function (AF).

FIG. 11 is a schematic diagram of a positioning apparatus provided by another embodiment of the present invention, which is applied to a current serving AMF corresponding to an observer UE. As shown in FIG. 11, the positioning apparatus includes an obtaining module 1101 configured to obtain a first location request sent by a core network device corresponding to a target UE; a triggering module 1102 configured to trigger an observer UE to perform a positioning procedure and a ranging procedure to determine location information of the target UE; a sending module 1103 configured to send the location information of the target UE to the core network device corresponding to the target UE.

In summary, with the positioning apparatus provided in the embodiments of the present invention, the current serving AMF corresponding to the observer UE obtains the first location request sent by the core network device corresponding to a target UE, triggers the observer UE to perform the positioning procedure and the ranging procedure to determine the location information of the target UE, and sends the location information of the target UE to the core network device corresponding to the target UE. It can be seen that in the embodiments of the present invention, the core network device corresponding to the target UE may obtain the location information of the target UE sent by the current serving AMF corresponding to the first observer UE by sending the first location request to the AMF corresponding to the first observer UE in the observer UE list. That is, in the embodiments of the present invention, when the Uu measurement is used to locate the target UE, if the Uu measurement cannot accurately locate the target UE in any case such as the target UE is power-limited, or the target UE is out of the network coverage of the base station, or there is no LoS path between the target UE and the base station, or the LoS path between the target UE and the base station is interfered, the target UE may be located with assistance of the PC5 measurement, which ensures the successful positioning of the target UE and improves the accuracy of the location result.

In an embodiment of the present invention, the apparatus described above is further configured to perform a discovery service for the target UE according to a discovery request of the core network device corresponding to the target UE; send a discovery notification to the core network device corresponding to the target UE, where the discovery notification is used to indicate that a first observer UE has discovered the target UE.

In a further embodiment of the present invention, the apparatus described above is further configured to obtain the discovery request sent by the core network device corresponding to the target UE; invoke a discovery procedure to trigger the observer UE to perform the discovery service for the target UE; obtain the discovery notification sent by the observer UE.

In a further embodiment of the present invention, the apparatus described above is further configured to select an LMF corresponding to the observer UE; send a second location request to the LMF corresponding to the observer UE, where the second location request includes an observer UE list and an identifier (ID) of the target UE, and the second location request is used to: make the LMF corresponding to the observer UE perform the positioning procedure according to the second location request to locate each observer UE in the observer UE list to obtain positioning measurement information, make the LMF corresponding to the observer UE perform the ranging procedure according to the second location request to allow each observer UE in the observer UE list to perform ranging on the target UE to obtain ranging measurement information, and make the LMF corresponding to the observer UE determine location information of the target UE according to all positioning measurement information and all ranging measurement information corresponding to all observer UEs; receive the location information of the target UE sent by the LMF corresponding to the observer UE.

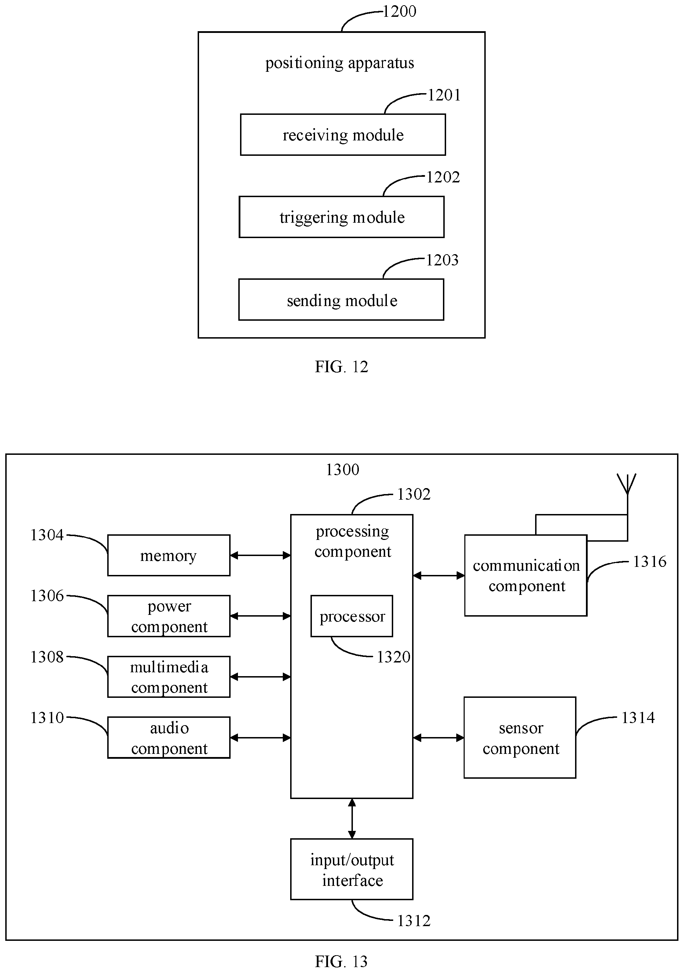

FIG. 12 is a schematic diagram of a positioning apparatus provided by still another embodiment of the present invention, which is applied to an LMF corresponding to an observer UE. As shown in FIG. 12, the apparatus includes: a receiving module 1201 configured to receive a second location request sent by a current serving AMF corresponding to an observer UE, where the second location request includes an observer UE list and an identifier (ID) of a target UE; a triggering module 1202 configured to trigger a positioning procedure for each observer UE in the observer UE list and a ranging procedure between each observer UE in the observer UE list and the target UE according to the second location request to determine location information of the target UE; a sending module 1203 configured to send the location information of the target UE to the current serving AMF corresponding to the observer UE.

In summary, with the positioning apparatus provided in the embodiments of the present invention, the core network device corresponding to the target UE receives the location request sent by the location requestor, where the location request includes the observer UE list and the ID of the target UE, sends the first location request to the current serving AMF corresponding to the first observer UE in the observer UE list, and obtains the location information of the target UE sent by the current serving AMF corresponding to the first observer UE. It can be seen that in the embodiments of the present invention, the core network device corresponding to the target UE may obtain the location information of the target UE sent by the current serving AMF corresponding to the first observer UE by sending the first location request to the AMF corresponding to the first observer UE in the observer UE list. That is, in the embodiments of the present invention, when the Uu measurement is used to locate the target UE, if the Uu measurement cannot accurately locate the target UE in any case such as the target UE is power-limited, or the target UE is out of the network coverage of the base station, or there is no LoS path between the target UE and the base station, or the LoS path between the target UE and the base station is interfered, the target UE may be located with assistance of the PC5 measurement, which ensures the successful positioning of the target UE and improves the accuracy of the location result.

In an embodiment of the present invention, the triggering module 1202 is further configured to perform the positioning procedure according to the second location request to locate each observer UE in the observer UE list to obtain positioning measurement information corresponding to each observer UE; perform the ranging procedure according to the second location request to allow each observer UE in the observer UE list to perform ranging on the target UE to obtain ranging measurement information corresponding to each observer UE; obtain the positioning measurement information and the ranging measurement information sent by each observer UE; determine the location information of the target UE according to all positioning measurement information and all ranging measurement information corresponding to all observer UEs.

FIG. 13 is a block diagram of a UE 1300 provided by an embodiment of the present invention. For example, the UE 1300 may be a mobile phone, a computer, a digital broadcast terminal device, a messaging device, a game console, a tablet device, a medical device, a fitness device, a personal digital assistant, or the like.

Referring to FIG. 13, the UE 1300 may include at least one of the following components: a processing component 1302, a memory 1304, a power component 1306, a multimedia component 1308, an audio component 1310, an input/output (I/O) interface 1312, a sensor component 1313, and a communication component 1316.

The processing component 1302 typically controls overall operations of the UE 1300, such as the operations associated with display, phone calls, data communications, camera operations, and recording operations. The processing component 1302 may include at least one processors 1320 to execute instructions to perform all or some of the steps in the above-described methods. Moreover, the processing component 1302 may include at least one module which facilitates the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the UE 1300. Examples of such data include instructions for any applications or methods operated on the UE 1300, contact data, phonebook data, messages, pictures, videos, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the UE 1300. The power component 1306 may include a power management system, at least one power sources, and any other components associated with the generation, management, and distribution of power in the UE 1300.

The multimedia component 1308 includes a screen providing an output interface between the UE 1300 and the user. In some embodiments, the screen may include a liquid crystal display (LCD) and a touch panel (TP). If the screen includes the touch panel, the screen may be implemented as a touch screen to receive input signals from the user. The touch panel includes at least one touch sensors to sense touches, swipes, and gestures on the touch panel. The touch sensors may not only sense a boundary of a touch or swipe action, but also sense a wake-up time and a pressure associated with the touch or swipe action. In some embodiments, the multimedia component 1308 includes a front camera and/or a rear camera. The front camera and/or the rear camera may receive external multimedia data while the UE 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone (MIC) configured to receive an external audio signal when the UE 1300 is in an operation mode, such as a call mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and peripheral interface modules, such as keyboards, click wheels, buttons, and the like. The buttons may include, but are not limited to, a home button, a volume button, a starting button, and a locking button.

The sensor component 1313 includes at least one sensor to provide status assessments of various aspects of the UE 1300. For instance, the sensor component 1313 may detect an open/closed status of the equipment 1300, relative positioning of components, e.g., the display and the keypad, of the UE 1300. The sensor component 1313 may also detect a change in position of the UE 1300 or a component of the UE 1300, a presence or absence of user contact with the UE 1300, an orientation or an acceleration/deceleration of the UE 1300, and a change in temperature of the UE 1300. The sensor component 1313 may include a proximity sensor configured to detect the presence of nearby objects without any physical contact. The sensor component 1313 may further include a light sensor, such as a CMOS or CCD image sensor, for use in imaging applications. In some embodiments, the sensor component 1313 may further include an accelerometer sensor, a gyroscope sensor, a magnetic sensor, a pressure sensor, or a temperature sensor.

The communication component 1316 is configured to facilitate wired or wireless communication between the UE 1300 and other devices. The UE 1300 can access a wireless network based on a communication standard, such as Wi-Fi, 2G, or 3G, or a combination thereof. In an illustrative embodiment, the communication component 1316 receives a broadcast signal or broadcast associated information from an external broadcast management system via a broadcast channel. In an illustrative embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the UE 1300 may be implemented with at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above methods.

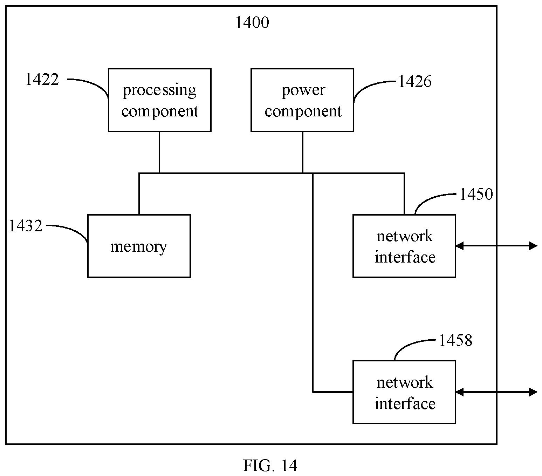

FIG. 14 is a block diagram of a base station 1400 provided by an embodiment of the present invention. For example, the base station 1400 may be provided as a network device. Referring to FIG. 14, the base station 1400 includes a processing component 1411, which further includes at least one of processors, and a memory resource represented by a memory 1432 configured to store instructions executable by the processing component 1422, such as application programs. The application programs stored in the memory 1432 may include one or more modules each corresponding to a set of instructions. In addition, a processing component 1417 is configured to execute instructions to perform any of the foregoing methods performed by the base station, for example, the method as shown in FIG. 1.

The base station 1400 may also include a power component 1417 configured to perform the power management of the base station 1400, a wired or wireless network interfaces 1450 configured to connect the base station 1400 to a network, and an input/output (I/O) interface 1458. The base station 1400 may operate based on an operating system stored in the memory 1432, such as Windows Server TM, Mac OS XTM, Unix TM, Linux TM, Free BSDTM, or the like.

In the above embodiments provided by the present invention, the methods provided in embodiments of the present invention are introduced from perspectives of the base station, the UE and the RIS array respectively. In order to implement the various functions in the methods provided by the above embodiments of the present invention, the base station and the UE may include a hardware structure and a software module, and implement the above functions in a form of the hardware structure, the software module, or the hardware structure plus the software module. One function among the above mentioned functions may be implemented in the form of the hardware structure, the software module, or the hardware structure plus the software module.

In the above embodiments provided by the present invention, the methods provided in embodiments of the present invention are introduced from perspectives of the base station, the UE and the RIS array respectively. In order to implement the various functions in the methods provided by the above embodiments of the present invention, the network device and the UE may include a hardware structure and a software module, and implement the above functions in a form of the hardware structure, the software module, or the hardware structure plus the software module. One function among the above mentioned functions may be implemented in the form of the hardware structure, the software module, or the hardware structure plus the software module.

Embodiments of the present invention provide a communication apparatus, which may include a transceiving module and a processing module. The transceiving module may include a sending module and/or a receiving module, the sending module is configured to implement a sending function, and the receiving module is configured to implement a receiving function. The transceiving module may implement the sending function and/or the receiving function.

The communication apparatus may be a terminal device (such as the UE in the foregoing method embodiments), may also be an apparatus in the terminal device, and may also be an apparatus that can be used in conjunction with the terminal device. Alternatively, the communication apparatus may be a network device, may also be an apparatus in the network device, and may also be an apparatus that can be used in conjunction with the network device.

Embodiments of the present invention provide a communication device, which may be a network device, or may be a terminal device (such as the UE in the foregoing method embodiments), or may be a chip, a chip system, or a processor that supports the network device to implement the above methods, or may be a chip, a chip system, or a processor that supports the terminal device to implement the above methods. The device may be configured to implement the methods as described in the above method embodiments, and for details, reference may be made to the descriptions in the above method embodiments.

The communications device may include one or more processors. The processor may be a general-purpose processor or a special-purpose processor. For example, it may be a baseband processor or a central processing unit. The baseband processor may be configured to process a communication protocol and communication data, and the central processing unit may be configured to control a communication device (such as a network device, a baseband chip, a terminal device, a terminal device chip, a DU or a CU, etc.), execute computer programs, and process data of the computer programs.

Optionally, the communication device may further include one or more memories having stored therein a computer program. The processor executes the computer program, to cause the communication device to implement the methods as described in the above method embodiments. Optionally, the memory may have stored therein data. The communication device and the memory may be provided separately or integrated together.

Optionally, the communication device may further include a transceiver and an antenna. The transceiver may be called a transceiving element, a transceiving machine, a transceiving circuit or the like, for implementing a transceiving function. The transceiver may include a receiver and a transmitter. The receiver may be called a receiving machine, a receiving circuit or the like, for implementing a receiving function. The transmitter may be called a sending machine, a sending circuit or the like, for implementing a sending function.

Optionally, the communication device may further include one or more interface circuits. The interface circuit is configured to receive a code instruction and transmit the code instruction to the processor. The processor runs the code instruction to enable the communication device to execute the methods as described in the above method embodiments.

The communication device is a core network device (such as the core network device corresponding to the target UE in the foregoing method embodiments). The processor is configured to execute the method shown in any one of FIGS. 1 to 5.

The communication device is the current serving AMF corresponding to the observer UE. The processor is configured to execute the method shown in any one of FIGS. 6 and 7.

The communication device is the LMF corresponding to the observer UE. The processor is configured to execute the method shown in FIG. 8.

In an implementation, the processor may include the transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read or write codes/data, or the above transceiving circuit, interface or interface circuit may be configured to transmit or transfer signals.

In an implementation, the processor may have stored therein a computer program that, when run on the processor, causes the communication device to implement the methods as described in the above method embodiments. The computer program may be embedded in the processor, and in this case, the processor may be implemented by a hardware.

In an implementation, the communication device may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an N-type metal-oxide-semiconductor (NMOS), a P-type metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be the network device or the terminal device (such as the UE in the foregoing method embodiments), but the scope of the communication device described in the present invention is not limited thereto, and the structure of the communication device may not be limited thereto. The communication device may be a stand-alone device or may be a part of a larger device. For example, the communication device may be: (1) a stand-alone integrated circuit (IC), or a chip, or a chip system or subsystem; (2) a set of one or more ICs, optionally, the set of ICs may also include a storage component for storing data and computer programs; (3) an ASIC, such as a modem; (4) a module that may be embedded in other devices; (5) a receiver, a terminal device, an intelligent terminal device, a cellular phone, a wireless device, a handheld machine, a mobile unit, a vehicle device, a network device, a cloud device, an artificial intelligence device, etc.; (6) others.

For the case where the communication device may be a chip or a chip system, the chip includes a processor and an interface. In the chip, one or more processors may be provided, and more than one interface may be provided.

Optionally, the chip further includes a memory for storing necessary computer programs and data.

Those skilled in the art may also understand that various illustrative logical blocks and steps listed in embodiments of the present invention may be implemented by an electronic hardware, a computer software, or a combination thereof. Whether such functions are implemented by a hardware or a software depends on specific applications and design requirements of an overall system. For each specific application, those skilled in the art may use various methods to implement the described functions, but such an implementation should not be understood as extending beyond the protection scope of embodiments of the present invention.

Embodiments of the present invention also provide a system for determining a duration of a side link. The system includes the communication apparatus as the terminal device (such as the first terminal device in the foregoing method embodiments) and the communication apparatus as the network device as described in the foregoing embodiments, or the system includes the communication device as the terminal device (such as the first terminal device in the foregoing method embodiments) and the communication device as the network device as described in the foregoing embodiments.

The present invention further provides a readable storage medium having stored thereon instructions that, when executed by a computer, cause functions of any of the above method embodiments to be implemented.

The present invention further provides a computer program product that, when executed by a computer, causes functions of any of the above method embodiments to be implemented.

The above embodiments may be implemented in whole or in part by a software, a hardware, a firmware or any combination thereof. When implemented using the software, the above embodiments may be implemented in whole or in part in a form of the computer program product. The computer program product includes one or more computer programs. When the computer program is loaded and executed on the computer, all or some of the processes or functions according to embodiments of the present invention will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line (DSL)) or a wireless manner (such as infrared, wireless, or via microwave, etc.). The computer-readable storage medium may be any available medium that can be accessed by the computer, or a data storage device such as the server or the data center integrated with one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)), etc.

Those of ordinary skill in the art can understand that the first, second, and other numeral numbers involved in the present invention are distinguished for convenience of description, and are not intended to limit the scope of embodiments of the present invention, and nor are they intended to represent sequential order.

The term "at least one" used in the present invention may also be described as one or more, and the term "a plurality of' may cover two, three, four or more, which are not limited in the present invention. In embodiments of the present invention, for a certain kind of technical feature, the technical features in this kind of technical feature are distinguished by term like "first", "second", "third", "A", "B", "C" and "D", etc., and these technical features described with the "first", "second", "third", "A", "B", "C" and "D" have no order of priority and have no order of size.

Other embodiments of the present invention will be apparent to those skilled in the art from consideration of the specification and practice of the present invention disclosed here. The present invention is intended to cover any variations, uses, or adaptations of the present invention following the general principles thereof and including such departures from the present invention as come within known or customary practice in the art. It is intended that the specification and examples be considered as illustrative, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. It is intended that the scope of the present invention be limited by the appended claims.

## Claims

1. A positioning method, applied to a core network device corresponding to a target user equipment (UE), comprising:
receiving a location request sent by a location requestor, wherein the location request comprises an observer UE list and an identifier (ID) of the target UE;
sending a first location request to a current serving access and mobility management function (AMF) corresponding to a first observer UE in the observer UE list;
obtaining location information of the target UE sent by the current serving AMF corresponding to the first observer UE.

2. The method according to claim 1, wherein before sending the first location request to the current serving AMF corresponding to the first observer UE in the observer UE list, the method further comprises:
requesting a discovery service from each observer UE, wherein the discovery service is used to discover the target UE;
obtaining a discovery notification sent by the current serving AMF corresponding to the first observer UE, wherein the discovery notification is used to indicate that the first observer UE has discovered the target UE.

3. The method according to claim 2, wherein before requesting the discovery service from each observer UE, the method further comprises:
determining whether a discovery service needs to be requested from each observer UE.

4. The method according to claim 3, wherein determining whether the discovery service needs to be requested from each observer UE comprises:
obtaining a privacy configuration file and a subscriber permanent identifier (SUPI) of the target UE by invoking a service operation from a unified data management (UDM);
determining whether to allow the target UE to be located according to the privacy configuration file of the target UE;
invoking the service operation from the UDM according to the SUPI of the target UE to request the UDM to return a network address of a current serving AMF corresponding to the target UE in response to allowing the target UE to be located;
determining that the discovery service needs to be requested from each observer UE in response to the UDM not returning the network address of the current serving AMF corresponding to the target UE.

5. The method according to claim 3, wherein determining whether the discovery service needs to be requested from each observer UE comprises:
determining that the discovery service needs to be requested from each observer UE in response to the target UE being identified as a UE with a low power consumption.

6. The method according to any one of claims 2-5, wherein the observer UE list comprises a SUPI of an observer UE;
requesting the discovery service from each observer UE comprises:
invoking a service operation from the UDM with the SUPI of each observer UE to request the UDM to return a network address of a current serving AMF corresponding to each observer UE;
sending a discovery request to the current serving AMF corresponding to each observer UE according to the network address of the current serving AMF corresponding to each observer UE, to allow the current serving AMF corresponding to each observer UE to invoke a discovery procedure to trigger each observer UE to perform the discovery service for the target UE.

7. The method according to claim 2, wherein the first observer UE is an observer UE corresponding to an AMF that first sends the discovery notification to the core network device among AMFs corresponding to all observer UEs.

8. The method according to claim 2, wherein after obtaining the discovery notification sent by the current serving AMF corresponding to the first observer UE, the method further comprises:
releasing discovery services of other observer UEs except the first observer UE.

9. The method according to claim 1, further comprising:
sending the location information of the target UE to the location requestor.

10. The method according to claim 1 or 9, wherein the location requestor is a location service (LCS) client or an application function (AF).

11. A positioning method, applied to a current serving access and mobility management function (AMF) corresponding to an observer UE, comprising:
obtaining a first location request sent by a core network device corresponding to a target UE;
determining location information of the target UE by triggering the observer UE to perform a positioning procedure and a ranging procedure;
sending the location information of the target UE to the core network device corresponding to the target UE.

12. The method according to claim 11, wherein before obtaining the first location request sent by the core network device corresponding to the target UE, the method further comprises:
performing a discovery service for the target UE according to a discovery request of the core network device corresponding to the target UE;
sending a discovery notification to the core network device corresponding to the target UE, wherein the discovery notification is used to indicate that a first observer UE has discovered the target UE.

13. The method according to claim 12, wherein performing the discovery service for the target UE according to the discovery request of the core network device corresponding to the target UE comprises:
obtaining the discovery request sent by the core network device corresponding to the target UE;
invoking a discovery procedure to trigger the observer UE to perform the discovery service for the target UE;
obtaining the discovery notification sent by the observer UE.

14. The method according to claim 11, wherein determining the location information of the target UE by triggering the observer UE to perform the positioning procedure and the ranging procedure comprises:
selecting a location management function (LMF) corresponding to the observer UE;
sending a second location request to the LMF corresponding to the observer UE, wherein the second location request comprises an observer UE list and an identifier (ID) of the target UE, and the second location request is used to:
make the LMF corresponding to the observer UE perform the positioning procedure according to the second location request to locate each observer UE in the observer UE list to obtain positioning measurement information,
make the LMF corresponding to the observer UE perform the ranging procedure according to the second location request to allow each observer UE in the observer UE list to perform ranging on the target UE to obtain ranging measurement information, and
make the LMF corresponding to the observer UE determine location information of the target UE according to all positioning measurement information and all ranging measurement information corresponding to all observer UEs;
receiving the location information of the target UE sent by the LMF corresponding to the observer UE.

15. A positioning method, applied to a location management function (LMF) corresponding to an observer UE, comprising:
receiving a second location request sent by a current serving access and mobility management function (AMF) corresponding to the observer UE, wherein the second location request comprises an observer UE list and an identifier (ID) of a target UE;
determining location information of the target UE by triggering a positioning procedure for each observer UE in the observer UE list and a ranging procedure between each observer UE in the observer UE list and the target UE according to the second location request;
sending the location information of the target UE to the current serving AMF corresponding to the observer UE.

16. The method according to claim 15, wherein determining the location information of the target UE by triggering the positioning procedure for each observer UE in the observer UE list and the ranging procedure between each observer UE in the observer UE list and the target UE according to the second location request comprises:
obtaining positioning measurement information corresponding to each observer UE by performing the positioning procedure according to the second location request to locate each observer UE in the observer UE list;
obtaining ranging measurement information corresponding to each observer UE by performing the ranging procedure according to the second location request to allow each observer UE in the observer UE list to perform ranging on the target UE;
obtaining the positioning measurement information and the ranging measurement information sent by each observer UE;
determining the location information of the target UE according to all positioning measurement information and all ranging measurement information corresponding to all observer UEs.

17. A positioning apparatus, comprising:
a receiving module configured to receive a location request sent by a location requestor, wherein the location request comprises an observer UE list and an identifier (ID) of the target UE;
a sending module configured to send a first location request to a current serving access and mobility management function (AMF) corresponding to a first observer UE in the observer UE list;
an obtaining module configured to obtain location information of the target UE sent by the current serving AMF corresponding to the first observer UE.

18. A positioning apparatus, comprising:
an obtaining module configured to obtain a first location request sent by a core network device corresponding to a target UE;
a triggering module configured to trigger an observer UE to perform a positioning procedure and a ranging procedure to determine location information of the target UE;
a sending module configured to send the location information of the target UE to the core network device corresponding to the target UE.

19. A positioning apparatus, comprising:
a receiving module configured to receive a second location request sent by a current serving access and mobility management function (AMF) corresponding to an observer UE, wherein the second location request comprises an observer UE list and an identifier (ID) of a target UE;
a triggering module configured to trigger a positioning procedure for each observer UE in the observer UE list and a ranging procedure between each observer UE in the observer UE list and the target UE according to the second location request to determine location information of the target UE;
a sending module configured to send the location information of the target UE to the current serving AMF corresponding to the observer UE.

20. A communication device, comprising:
a processor, and
a memory having stored therein a computer program that, when executed by the processor, causes the device to implement the method according to any one of claims 1 to 10.

21. A communication device, comprising:
a processor, and
a memory having stored therein a computer program that, when executed by the processor, causes the device to implement the method according to any one of claims 11 to 14.

22. A communication device, comprising:
a processor, and
a memory having stored therein a computer program that, when executed by the processor, causes the device to implement the method according to any one of claims 15 to 16.

23. A communication device, comprising a processor and an interface circuit;
wherein the interface circuit is configured to receive a code instruction and transmit the code instruction to the processor; and
the processor is configured to run the code instruction to implement the method according to any one of claims 1 to 10.

24. A communication device, comprising a processor and an interface circuit;
wherein the interface circuit is configured to receive a code instruction and transmit the code instruction to the processor; and
the processor is configured to run the code instruction to implement the method according to any one of claims 11 to 14.

25. A communication device, comprising a processor and an interface circuit;
wherein the interface circuit is configured to receive a code instruction and transmit the code instruction to the processor; and
the processor is configured to run the code instruction to implement the method according to any one of claims 15 to 16.

26. A computer-readable storage medium having stored therein instructions that, when executed, cause the method according to any one of claims 1 to 10 to be implemented.

27. A computer-readable storage medium having stored therein instructions that, when executed, cause the method according to any one of claims 11 to 14 to be implemented.

28. A computer-readable storage medium having stored therein instructions that, when executed, cause the method according to any one of claims 15 to 16 to be implemented.
